# EUROPÄISCHE PATENTSCHRIFT

(11) **EP 3 029 430 B1**
(45) Veröffentlichungstag und Bekanntmachung des Hinweises auf die Patenterteilung: **01.11.2017**
(21) Anmeldenummer: 14196074.0
(22) Anmeldetag: 03.12.2014
(51) Int. Cl.: G01D 11/30, F15B 15/28

(54) **Sensor mit Nutenstein**
Sensor with sliding block
Capteur doté de coulisseau

(43) Veröffentlichungstag der Anmeldung: 08.06.2016
(73) Patentinhaber: SICK AG, 79183 Waldkirch (DE)
(72) Erfinder: Selinger, Andreas, 79341 Kenzingen (DE); Dorer, Armin, 78120 Furtwangen (DE)
(74) Vertreter: Rieger, Daniel-Stephan

(56) Entgegenhaltungen:
- DE-B3-102012 014 519
- DE-U1- 29 811 811
- FR-A1- 2 811 724

## Beschreibung

Die vorliegende Erfindung betrifft einen Sensor mit Nutenstein.

Die DE 298 11 811 U1 offenbart eine Vorrichtung zur lösbaren Verankerung eines Sensors in einer längsseits offenen Verankerungsnut eines Bauteils, mit einer mit dem Sensor verbundenen Klemmeinrichtung, die ein drehbewegliches Klemmteil aufweist, das bei in die Verankerungsnut eingesetztem Sensor durch Verdrehen in eine Klemmstellung verbringbar ist, in der es mit der Innenfläche der Verankerungsnut verspannt ist, wobei das Klemmteil so ausgeführt ist, dass es zum Erhalt der Klemmstellung ausschließlich zwischen sich gegenüberliegenden Seitenflächen der Verankerungsnut verspannbar ist.

Die DE 94 14 869 U1 offenbart eine Vorrichtung zur lösbaren Verankerung eines Sensors in einer Verankerungsnut, wobei die Verankerungsnut einen durch sich gegenüberliegende Längsvorsprünge begrenzten Nuthals und einen in Tiefenrichtung an den Nuthals anschließenden breiteren Verankerungsabschnitt aufweist, mit einer mit dem Sensor verbundenen Klemmeinrichtung, die ein Klemmteil aufweist, das bei verankertem Sensor eine Klemmstellung einnimmt, in der es in die Verankerungsnut eingreift und mit der Innenfläche der Verankerungsnut verspannt ist, dadurch gekennzeichnet, dass das Klemmteil zwischen einer das Einsetzen in die Verankerungsnut durch den Nuthals hindurch ermöglichenden Einsetzstellung und der Klemmstellung bewegbar ist und dass zusätzlich zu der Klemmeinrichtung mit Abstand zu dieser eine Verrastungseinrichtung vorgesehen ist, die mindestens eine Rastnase aufweist, die bei verankertem Sensor in dem Verankerungsabschnitt der Verankerungsnut unter Einnahme einer Raststellung einen der Längsvorsprünge hintergreift, und die entgegen einer Rückstellkraft aus der Raststellung in eine Durchtrittsstellung bewegbar ist, in der ihr Durchtritt durch den Nuthals möglich ist.

Die Sensoren nach dem Stand der Technik eignen sich lediglich für eine Befestigung in einer T-förmigen Befestigungsnut mit einem Hinterschnitt.

Die FR 2 811 724 offenbart einen Positionsdetektor für einen Pneumatikzylinder, wobei der Detektor in einer Nut montiert ist.

Die DE 10 2012 014 519 B3 offenbart eine Sensor-Aktor-Box mit einem elektrisch leitenden ringförmigen Verbindungselement zur elektrischen Verbindung mit einem Trägerkörper.

Eine Aufgabe der Erfindung besteht darin, eine einfachere Befestigung eines Sensors für beliebige Nutgeometrien bereitzustellen. Weiter besteht die Aufgabe darin, einen Sensor bereitzustellen, der weniger störanfällig ist, insbesondere elektrisch bzw. elektronisch weniger störanfällig ist.

Die Aufgabe wird gemäß Anspruch 1 gelöst durch einen Sensor mit einem Sensorgehäuse, wobei das Sensorgehäuse oder ein Teil des Sensorgehäuses in eine Befestigungsnut in einen metallischen Befestigungskörper ragt, zur Befestigung des Sensors, wobei an dem Sensorgehäuse ein drehbarer metallischer Nutenstein vorgesehen ist, wobei der Nutenstein von einem Gewindestift gehalten ist, dadurch gekennzeichnet, dass der Nutenstein mit einem definierten elektrischen Potential des Sensors verbunden ist, wobei der Gewindestift eine Madenschraube aus Metall ist, wobei sich die Madenschraube bei einer Befestigung am Nutgrund der Befestigungsnut abstützt. Durch die Erfindung wird ein definiertes elektrisches Potential mit dem Sensor verbunden. Dadurch ist gewährleistet, dass zwischen dem Nutenstein und dem Befestigungskörper keine Isolierung besteht und so beispielsweise keine unterschiedlichen elektrischen Potentiale zwischen dem Sensor und dem Befestigungskörper sich bilden können. Dadurch wird die elektromagnetische Verträglichkeit des Sensors deutlich verbessert. Das elektrische Potential des Sensors ist ein elektrisches Potential, das mit der Elektronikkarte des Sensors verbunden ist. Das elektrische Potential ist beispielsweise von der Elektronikkarte über einen metallischen Gewindestift mit dem Nutenstein verbunden. Durch den Nutenstein wird beim Montieren des Sensors eine Oxidschicht des Befestigungskörpers in der Befestigungsnut durchbrochen und eine elektrische Verbindung zwischen Nutenstein und dem Befestigungskörper hergestellt.

Bei dem Sensor handelt es sich bevorzugt um einen magnetischen Sensor, insbesondere um einen magnetischen Positions- oder Wegesensor. Jedoch kann der Sensor auch ein kapazitiver, optischer oder induktiver Sensor sein.

Das Prinzip der Befestigung liegt darin, dass der Nutenstein sich durch eine Drehbewegung in der Befestigungsnut verkrallt und ein Gewindestift sich am Nutgrund zusätzlich abstützt.

Der Gewindestift weist ein Außengewinde auf und ist in einer Öffnung oder einer Bohrung des Sensorgehäuses geführt. Der Gewindestift kann auch als Madenschraube bezeichnet werden. Der Gewindestift weist an einem Ende Betätigungsmittel, beispielsweise einen Schlitz für einen Schraubendreher auf. An dem gegenüberliegenden Ende weist der Gewindestift optional ein spitz zulaufendes oder kegelförmiges Ende auf.

An dem, dem Betätigungsmittel gegenüberliegenden Ende ist der Nutenstein angeordnet. Der Nutenstein weist zentrisch eine Gewindebohrung mit einem Innengewinde auf. Der Gewindestift ist durch das Innengewinde des Nutensteins geführt. Der Nutenstein ist damit durch den Gewindestift drehbar an dem Sensorgehäuse gelagert.

Der Nutenstein weist parallel zu der Innengewindeachse vier Seiten auf und senkrecht zu der Innengewindeachse zwei Seiten auf. Zwei gegenüberliegende Seiten die parallel zur Innengewindeachse angeordnet sind, weisen einen geringeren Abstand auf, als die anderen zwei gegenüberliegenden Seiten, die parallel zur Innengewindeachse angeordnet sind.

Die zwei parallelen Seiten, die einen geringeren Abstand aufweisen, weisen einen Abstand auf, der kleiner ist als die Nutweite senkrecht zur Gewindestiftachse. Dadurch kann der Sensor mit dem Nutenstein in die Befestigungsnut eingeführt werden. Der Nutenstein ist dabei in der Befestigungsnut angeordnet. Dabei sind die Seiten mit einem geringeren Abstand parallel zu einer Nutlängenachse ausgerichtet, wodurch der Sensor in die Befestigungsnut eingeführt werden kann.

Die zwei parallelen Seiten, die einen größeren Abstand aufweisen, weisen einen Abstand auf, der größer ist als die Nutweite senkrecht zu der Gewindestiftachse und senkrecht zur Nutlängenachse. Wenn die Seiten mit größerem Abstand parallel zur Nutlängenachse ausgerichtet sind, kann der Sensor nicht direkt von oben in die Befestigungsnut eingeführt werden, da der Nutenstein in dieser Ausrichtung breiter ist als die Breite der Befestigungsnut. Der Sensor könnte lediglich längs von der Seite in die Befestigungsnut eingeführt werden.

Durch eine Drehbewegung des Gewindestiftes wird der Nutenstein in der Befestigungsnut gedreht, bis er an den Flanken bzw. Seiten der Befestigungsnut anliegt bzw. sich verkrallt. Anschließend wird der Gewindestift weitergedreht und so den Nutenstein weiter durchdringt, bis der Gewindestift am Nutgrund anliegt. Der Nutenstein weist die Gewindebohrung auf, wobei der Gewindestift in der Gewindebohrung gehalten ist. Der Gewindestift stützt sich dadurch auf dem Nutgrund ab und drückt den Nutenstein nach oben zur Nutöffnung hin, wodurch der Sensor in der Befestigungsnut gehalten wird.

Um die Verbindung wieder zu lösen, muss der Gewindestift einfach ein wenig, beispielsweise ein paar Millimeter heraus- oder zurückgedreht werden. Zwischen dem Außengewinde des Gewindestifts und dem Innengewinde des Nutensteins ist Reibung vorhanden, wodurch der Nutenstein durch den Gewindestift zurückgedreht wird. Sobald die schmalen Seiten bzw. die Seiten mit geringerem Abstand wieder parallel zu den Seiten der Befestigungsnut sind, kann der Sensor wieder entnommen werden.

In Weiterbildung der Erfindung weist der Nutenstein eine rechteckige, plattenförmige Grundform mit vier abgerundeten Ecken auf, wobei zwei gegenüberliegende Ecken einen ersten größeren Radius aufweisen, als die übrigen zwei abgerundeten Ecken.

Durch die zwei gegenüberliegenden Ecken mit dem ersten größeren Radius ist gewährleistet, dass der Nutenstein nur in einer einzigen ersten Dreh- bzw. Verschwenkrichtung aus dem Sensor herausgedreht bzw. herausgeschwenkt werden kann und nur in einer einzigen umgekehrten zweiten Dreh- bzw. Verschwenkrichtung wieder in den Sensor hineingedreht bzw. hineingeschwenkt werden kann. Dabei liegen die Seiten des Nutensteins mit einem größeren Abstand in der Montagestellung des Sensors am Sensorgehäuse an. Durch die Abrundungen am Nutenstein lässt sich der Nutenstein nur in eine Richtung herausdrehen. Die Geometrie des Nutensteins ist daher so gewählt, dass ein unbeabsichtigtes Zurückdrehen nicht erfolgen kann.

In Weiterbildung der Erfindung weist der Nutenstein und Gewindestift jeweils korrespondierende Gewinde auf, die ineinander greifen, wobei die korrespondierenden Gewinde ein schwergängiges Gewinde mit einer erhöhten Reibung bilden.

Durch das schwergängige Gewinde wird die Kraft von dem Gewindestift auf den Nutenstein übertragen, damit der Nutenstein sich in den Nutschultern verkrallen kann.

In Weiterbildung der Erfindung weist der Nutenstein an mindestens einer Seite, die an der Nutwand der Befestigungsnut anliegt, eine Verzahnung auf. Durch die Verzahnung wird die Haltekraft des Sensors erhöht.

In Weiterbildung der Erfindung ist das definierte Potential ein Erdungspotential. Gemäß dieser Weiterbildung sind der Sensor und der Befestigungskörper mit dem Erdungspotential verbunden, wodurch die elektromagnetische Verträglichkeit des Sensors verbessert ist.

In Weiterbildung der Erfindung ist der Gewindestift aus Metall und mit dem definierten elektrischen Potential des Sensors verbunden. Beispielsweise ist eine Aufnahme des Gewindestifts metallisch ausgeführt und mit einem definierten elektrischen Potential des Sensors verbunden. Diese Verbindung ist einfach möglich, da beispielsweise die Aufnahme direkt mit einem Kontakt der Leiterplatte verbunden sein kann. Der Gewindestift ist dann durch die Aufnahme mit dem elektrischen Potential verbunden und der Nutenstein ist über den Gewindestift mit dem elektrischen Potential verbunden.

In Weiterbildung der Erfindung ist die Befestigungsnut C-förmig ausgebildet. Eine C-förmige-Befestigungsnut ist einfacher herstellbar als eine T-förmige-Befestigungsnut, da die C-förmige Befestigungsnut keine rechtwinkligen Kanten aufweist. Gemäß der Erfindung wird der Sensor zunächst durch die Klemmkraft, also durch einen Kraftschluss in der Befestigungsnut gehalten. Ein Formschluss ist dabei zusätzlich durch den in der Befestigungsnut verdrehten Nutenstein gegeben.

In Weiterbildung der Erfindung ist der Nutenstein austauschbar angeordnet. Dadurch können Nutensteine mit unterschiedlichen Abmessungen für unterschiedliche Befestigungsnuten eingesetzt werden. Dadurch kann der Sensor in verschiedenen Nuten einfach befestigt werden. Beispielsweise kann der Sensor dadurch auch in jeder beliebigen Befestigungsnut, insbesondere in einer beliebigen T-förmigen oder beliebigen C-förmigen Befestigungsnut befestigt werden.

In Weiterbildung der Erfindung weist der Sensor an zwei gegenüberliegenden Enden eines länglichen Sensorgehäuses jeweils eine Befestigung mit jeweils einem Nutenstein auf, wodurch der Sensor an jedem der zwei Enden befestigbar ist. Dadurch kann der Sensor stabiler befestigt werden. Insbesondere bei länglichen Sensorgehäusen kann der Sensor stabiler befestigt werden. Dabei kann es optional auch vorgesehen sein, dass auch entlang des Sensorgehäuses weitere Nutensteine zur Befestigung angeordnet sind.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor mit einem Sensorgehäuse in einer Befestigungsnut, wobei der Nutenstein nicht festgeklemmt ist;
- Figur 2: einen festgeklemmten Sensor mit einem Sensorgehäuse in einer Befestigungsnut;
- Figur 3: einen Nutenstein;
- Figur 4: einen Nutenstein in einem Sensorgehäuse;
- Figur 5: einen Sensor mit zwei Nutensteinen, wobei je ein Nutenstein an je einem Ende des Sensorgehäuses angeordnet ist;
- Figur 6: einen Sensor mit zwei Nutensteinen und einer elektrischen Verbindung in einer Querschnittsdarstellung.

In den nachfolgenden Figuren sind identische Teile mit identischen Bezugszeichen versehen.

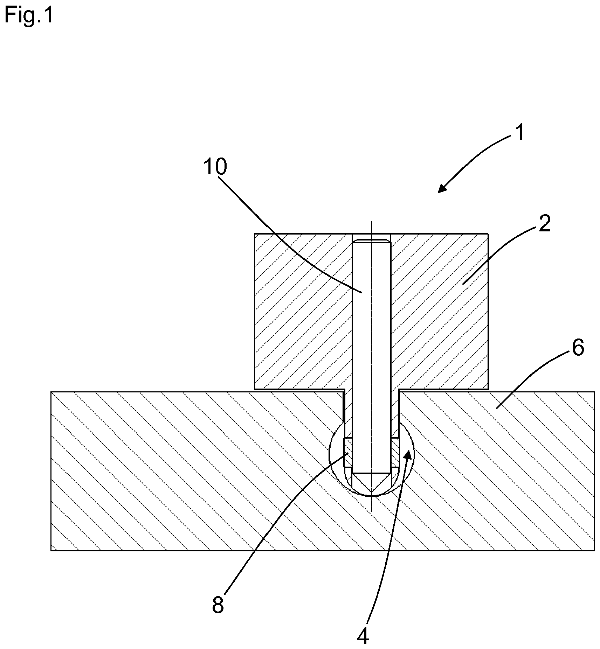

Figur 1 zeigt einen Sensor 1 mit einem Sensorgehäuse 2, wobei das Sensorgehäuse 2 oder ein Teil des Sensorgehäuses 2 in eine Befestigungsnut 4 in einen metallischen Befestigungskörper 6 ragt, zur Befestigung des Sensors 1, wobei an dem Sensorgehäuse 2 ein drehbarer metallischer Nutenstein 8 vorgesehen ist, wobei der Nutenstein 8 von einem Gewindestift 10 gehalten ist, dadurch gekennzeichnet, dass der Nutenstein 8 mit einem definierten elektrischen Potential des Sensors 1 verbunden ist.

Das elektrische Potential des Sensors 1 ist ein elektrisches Potential, das mit der Elektronikkarte des Sensors 1 verbunden ist. Das elektrische Potential ist beispielsweise von der Elektronikkarte bzw. Leiterplatte über einen metallischen Gewindestift 10 mit dem Nutenstein 8 verbunden. Durch den Nutenstein 8 wird beim Montieren des Sensors 1 eine Oxidschicht des Befestigungskörpers 6 in der Befestigungsnut 4 durchbrochen und eine elektrische Verbindung zwischen Nutenstein 8 und dem Befestigungskörper 6 hergestellt.

Bei dem Sensor 1 handelt es sich bevorzugt um einen magnetischen Sensor, insbesondere um einen magnetischen Positions- oder Wegesensor. Jedoch kann der Sensor auch ein kapazitiver, optischer oder induktiver Sensor sein.

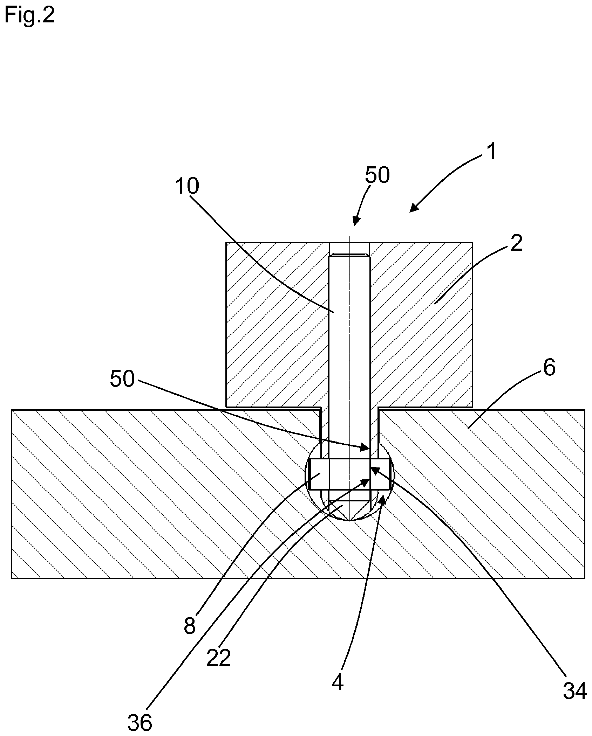

Das Prinzip der Befestigung liegt darin, dass der Nutenstein 8 sich durch eine Drehbewegung in einer Befestigungsnut 4 verkrallt und ein Gewindestift 10 sich am Nutgrund der Befestigungsnut zusätzlich abstützt, wie in Figur 2 dargestellt.

Der Gewindestift 10 weist ein Außengewinde 34 auf und ist in einer Öffnung oder Bohrung 50 des Sensorgehäuses 2 geführt. Der Gewindestift 10 kann auch als Madenschraube bezeichnet werden. Der Gewindestift 10 weist an einem Ende Betätigungsmittel, beispielsweise einen Schlitz für einen Schraubendreher auf. An dem gegenüberliegenden Ende weist der Gewindestift 10 optional ein spitz zulaufendes oder kegelförmiges Ende 22 auf.

An dem, dem Betätigungsmittel gegenüberliegenden Ende ist der Nutenstein 8 angeordnet. Der Nutenstein 8 weist zentrisch eine Gewindebohrung mit einem Innengewinde 36 auf. Der Gewindestift 10 ist durch das Innengewinde 36 des Nutensteins 8 geführt. Der Nutenstein 8 ist damit durch den Gewindestift 10 drehbar an dem Sensorgehäuse 2 gelagert.

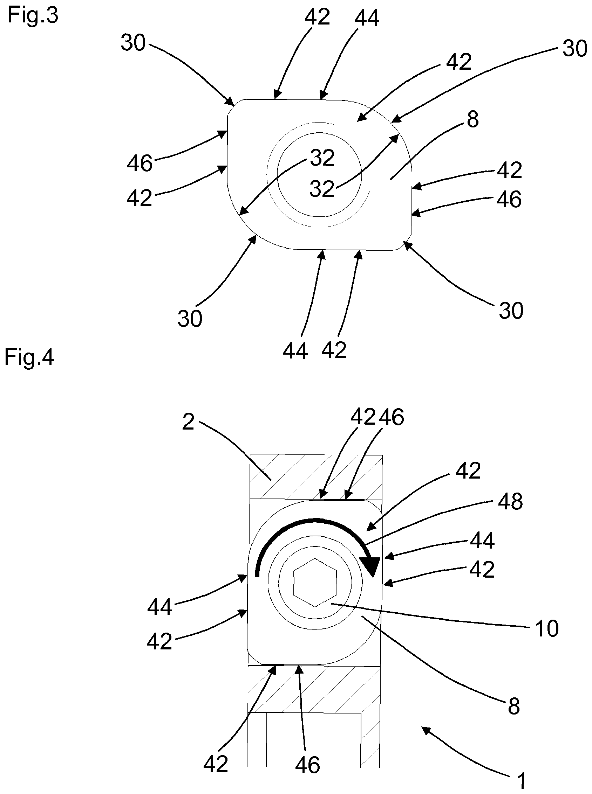

Gemäß Figur 3 weist der Nutenstein 8 parallel zu der Innengewindeachse vier Seiten 42 auf und senkrecht zu der Innengewindeachse zwei Seiten 42 auf. Zwei gegenüberliegende Seiten 44, die parallel zur Innengewindeachse angeordnet sind, weisen einen geringeren Abstand auf, als die anderen zwei gegenüberliegenden Seiten 46, die parallel zur Innengewindeachse angeordnet sind.

Die zwei parallelen Seiten 44, die einen geringeren Abstand aufweisen, weisen einen Abstand auf, der kleiner ist als die Nutweite der Befestigungsnut senkrecht zur Gewindestiftachse. Dadurch kann der Sensor mit dem Nutenstein 8 in die Befestigungsnut eingeführt werden, gemäß der Stellung, die in Figur 4 dargestellt ist. Der Nutenstein 8 ist dabei in der Befestigungsnut angeordnet. Dabei sind die Seiten 44 mit einem geringeren Abstand parallel zu einer Nutlängenachse ausgerichtet, wodurch der Sensor 1 in die Befestigungsnut eingeführt werden kann.

Die zwei parallelen Seiten 46, die einen größeren Abstand aufweisen, weisen einen Abstand auf, der größer ist als die Nutweite senkrecht zu der Gewindestiftachse und senkrecht zur Nutlängenachse. Wenn die Seiten 46 mit größerem Abstand parallel zur Nutlängenachse ausgerichtet sind, kann der Sensor 1 nicht direkt von oben in eine Befestigungsnut eingeführt werden, da der Nutenstein 8 in dieser Ausrichtung breiter ist, als die Breite der Befestigungsnut. Der Sensor 1 könnte lediglich längs von der Seite in die Befestigungsnut eingeführt werden.

Gemäß Figur 3 weist der Nutenstein 8 eine rechteckige, plattenförmige Grundform mit vier abgerundeten Ecken 30 auf, wobei zwei gegenüberliegende Ecken einen ersten größeren Radius 32 aufweisen, als die übrigen zwei abgerundeten Ecken.

Durch die zwei gegenüberliegenden Ecken 30 mit dem ersten größeren Radius 32 ist gewährleistet, dass der Nutenstein 8 nur in einer einzigen ersten Dreh- bzw. Verschwenkrichtung aus dem Sensor 1 herausgedreht bzw. herausgeschwenkt werden kann und nur in einer einzigen umgekehrten zweiten Dreh- bzw. Verschwenkrichtung wieder in den Sensor 1 hineingedreht bzw. hineingeschwenkt werden kann. Dabei liegen die Seiten 46 des Nutensteins 8 mit einem größeren Abstand in der Montagestellung des Sensors 1 am Sensorgehäuse 2 an. Durch die Abrundungen bzw. Radien 32 am Nutenstein 8 lässt sich der Nutenstein 8 nur in eine Richtung herausdrehen. Die Geometrie des Nutensteins 8 ist daher so gewählt, dass ein unbeabsichtigtes zurückdrehen nicht erfolgen kann.

Durch eine Drehbewegung 48 gemäß Figur 4 des Gewindestiftes 10, wird der Nutenstein 8 in der Befestigungsnut gedreht bis er an den Flanken bzw. Seiten der Befestigungsnut anliegt bzw. sich verkrallt. Anschließend wird der Gewindestift 10 weitergedreht und so den Nutenstein 8 weiter durchdringt, bis der Gewindestift 10 am Nutgrund anliegt, wie in Figur 2 dargestellt. Der Nutenstein 8 weist die Gewindebohrung auf, wobei der Gewindestift 10 in der Gewindebohrung gehalten ist. Der Gewindestift 10 stützt sich dadurch auf dem Nutgrund ab und drückt den Nutenstein 8 nach oben zur Nutöffnung hin, wodurch der Sensor 1 in der Befestigungsnut 4 gehalten wird.

Um die Verbindung wieder zu lösen, muss der Gewindestift 10 gemäß Figur 2 einfach ein wenig, beispielsweise ein paar Millimeter heraus- oder zurückgedreht werden. Zwischen dem Außengewinde 34 des Gewindestifts 10 und dem Innengewinde 36 des Nutensteins 8 ist Reibung vorhanden, wodurch der Nutenstein 8 durch den Gewindestift 10 zurückgedreht wird. Sobald gemäß Figur 4 die schmalen Seiten 44 bzw. die Seiten 44 mit geringerem Abstand wieder parallel zu den Seiten der Befestigungsnut sind, kann der Sensor 1 wieder aus der Befestigungsnut 4 entnommen werden.

Gemäß Figur 4 weist der Nutenstein 8 und der Gewindestift 10 jeweils korrespondierende Gewinde auf, die ineinander greifen, wobei die korrespondierenden Gewinde ein schwergängiges Gewinde mit einer erhöhten Reibung bilden.

Durch das schwergängige Gewinde wird die Kraft von dem Gewindestift 10 auf den Nutenstein 8 übertragen, damit der Nutenstein 8 sich in den Nutschultern verkrallen kann.

Gemäß einer nicht dargestellten Weiterbildung weist der Nutenstein 8 an mindestens einer Seite, die an der Nutwand anliegt, eine Verzahnung auf. Durch die Verzahnung wird die Haltekraft des Sensors 1 erhöht.

Optional ist das definierte Potential ein Erdungspotential. Gemäß dieser Weiterbildung sind der Sensor 1 und der Befestigungskörper 6 mit dem Erdungspotential verbunden, wodurch die elektromagnetische Verträglichkeit des Sensors 1 verbessert ist.

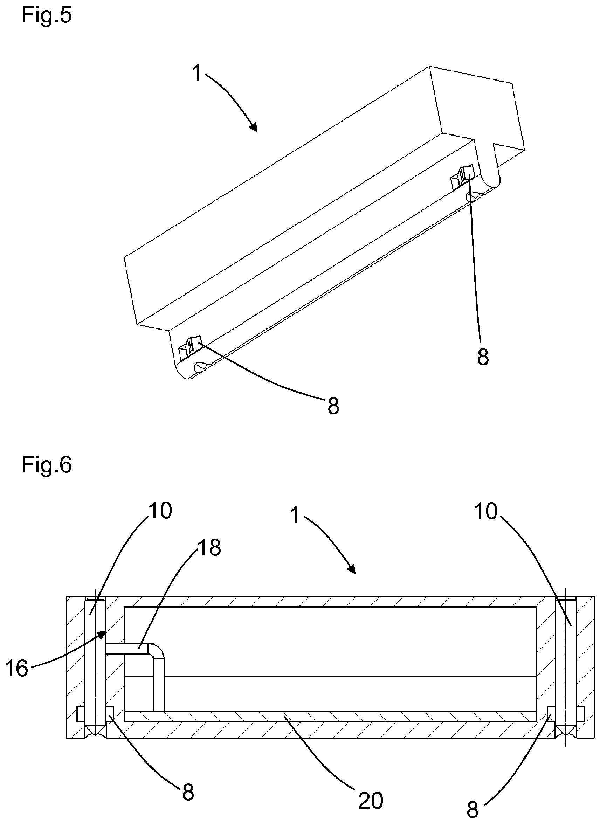

Gemäß Figur 6 ist der Gewindestift 10 optional aus Metall und mit dem definierten elektrischen Potential des Sensors 1 verbunden. Beispielsweise ist eine Aufnahme 16 des Gewindestifts 10 metallisch ausgeführt und mit einem definierten elektrischen Potential des Sensors 1 verbunden. Diese Verbindung ist einfach möglich, da beispielsweise die Aufnahme 16 direkt mit einem Kontakt der Leiterplatte 20 verbunden sein kann. Der Gewindestift 10 ist dann durch die Aufnahme mit dem elektrischen Potential verbunden und der Nutenstein 8 ist über den Gewindestift 10 mit dem elektrischen Potential verbunden.

Gemäß Figur 1 und Figur 2 ist die Befestigungsnut 4 C-förmig ausgebildet. Eine C-förmige-Befestigungsnut ist einfacher herstellbar als eine T-förmige-Befestigungsnut, da die C-förmige Befestigungsnut keine rechtwinkligen Kanten aufweist. Gemäß der Erfindung wird der Sensor 1 zunächst durch die Klemmkraft, also durch einen Kraftschluss in der Befestigungsnut 4 gehalten. Ein Formschluss ist dabei zusätzlich durch den in der Befestigungsnut 4 verdrehten Nutenstein 8 gegeben.

Gemäß Figur 5 ist der Nutenstein 8 austauschbar angeordnet. Dadurch können Nutensteine 8 mit unterschiedlichen Abmessungen für unterschiedliche Befestigungsnuten 4 eingesetzt werden. Dadurch kann der Sensor 1 in verschiedenen Befestigungsnuten 4 einfach befestigt werden. Beispielsweise kann der Sensor 1 dadurch auch in jeder beliebigen Befestigungsnut 4, insbesondere in einer beliebigen T-förmigen oder beliebigen C-förmigen Befestigungsnut 4 befestigt werden.

Gemäß Figur 5 weist der Sensor 1 an zwei gegenüberliegenden Enden eines länglichen Sensorgehäuses 2 jeweils eine Befestigung mit jeweils einem Nutenstein 8 auf, wodurch der Sensor 1 an jedem der zwei Enden befestigbar ist. Dadurch kann der Sensor 1 stabiler befestigt werden.

Figur 6 zeigt eine elektrische Verbindung 18 zwischen Gewindestift 10 und Leiterplatte 20 des Sensors 1. Da der Gewindestift 10 metallisch ausgeführt ist, ist der metallische Nutenstein 8 mit einem definierten elektrischen Potential des Sensors 1 verbunden.

### Bezugszeichen:

1 Sensor
2 Sensorgehäuse
4 Befestigungsnut
6 Befestigungskörper
8 Nutenstein
10 Gewindestift
16 Aufnahme
18 elektrische Verbindung
20 Leiterplatte
22 kegelförmiges Ende
28 Nutwand
30 Ecken
32 erster größerer Radius
34 Außengewinde
36 Innengewinde
40 C-förmige Befestigungsnut
42 Seite
44 Seiten mit geringerem Abstand
46 Seiten mit größerem Abstand
48 Drehbewegung
50 Öffnung oder Bohrung

## Patentansprüche

1. Sensor mit einem Sensorgehäuse (2), wobei das Sensorgehäuse (2) oder ein Teil des Sensorgehäuses (2) in eine Befestigungsnut (4) in einen metallischen Befestigungskörper (6) ragt, zur Befestigung des Sensors (1), wobei an dem Sensorgehäuse (2) ein drehbarer metallischer Nutenstein (8) vorgesehen ist, wobei der Nutenstein (8) von einem Gewindestift (10) gehalten ist, **dadurch gekennzeichnet, dass** der Nutenstein (8) mit einem definierten elektrischen Potential des Sensors (1) verbunden ist, wobei der Gewindestift eine Madenschraube aus Metall ist, wobei sich die Madenschraube bei einer Befestigung am Nutgrund der Befestigungsnut (4) abstützt.

2. Sensor nach Anspruch 1, **dadurch gekennzeichnet, dass** der Nutenstein (8) eine rechteckige, plattenförmige Grundform mit vier abgerundeten Ecken (30) aufweist, wobei zwei gegenüberliegende Ecken (30) einen ersten größere Radius (32) aufweisen, als die übrigen zwei abgerundeten Ecken (30).

3. Sensor nach Anspruch 1, **dadurch gekennzeichnet, dass** der Nutenstein (8) und der Gewindestift (10) jeweils korrespondierende Gewinde aufweisen, die ineinander greifen, wobei die korrespondierenden Gewinde ein schwergängiges Gewinde bilden.

4. Sensor nach einem der vorhergehenden Ansprüche, **dadurch gekennzeichnet, dass** der Nutenstein (8) an mindestens einer Seite, die an der Nutwand anliegt, eine Verzahnung aufweist.

5. Sensor nach einem der vorhergehenden Ansprüche, **dadurch gekennzeichnet, dass** das definierte Potential ein Erdungspotential ist.

6. Sensor nach einem der vorhergehenden Ansprüche, **dadurch gekennzeichnet, dass** der Gewindestift (10) aus Metall ist und mit dem definierten elektrischen Potential des Sensor (1) verbunden ist.

7. Sensor nach einem der vorhergehenden Ansprüche, **dadurch gekennzeichnet, dass** die Befestigungsnut (4) C-förmig ausgebildet ist.

8. Sensor nach einem der vorhergehenden Ansprüche, **dadurch gekennzeichnet, dass** der Nutenstein (8) austauschbar angeordnet ist.

9. Sensor nach einem der vorhergehenden Ansprüche, **dadurch gekennzeichnet, dass** der Sensor (1) an zwei gegenüberliegenden Enden eines länglichen Sensorgehäuses (2) jeweils eine Befestigung mit jeweils einem Nutenstein (8) aufweist, wodurch der Sensor (1) an jedem der zwei Enden befestigbar ist.

## Claims

1. A sensor having a sensor housing (2), wherein the sensor housing (2) or a part of the sensor housing (2) projects into a fastening groove (4) in a metallic fastening body (6), for fastening the sensor (1), wherein a rotatable metallic sliding block (8) is provided at the sensor housing (2), with the sliding block (8) being held by a threaded pin (10), **characterized in that** the sliding block (8) is connected to a defined electric potential of the sensor (1), with the threaded pin being a grub screw of metal, with the grub screw being supported at the groove base of the fastening groove (4) at a fastening.

2. A sensor in accordance with claim 1, **characterized in that** the sliding block (8) has a rectangular, plate-like basic shape having four rounded corners (30), with two oppositely disposed corners (30) having a first larger radius (32) than the remaining two rounded corners (30).

3. A sensor in accordance with claim 1, **characterized in that** the sliding block (8) and the threaded pin (10) each have corresponding threads that engage into one another, with the corresponding threads forming a stiff thread.

4. A sensor in accordance with any one of the preceding claims, **characterized in that** the sliding block (8) contacts a toothed arrangement at at least one side that contacts the groove wall.

5. A sensor in accordance with any one of the preceding claims, **characterized in that** the defined potential is a ground potential.

6. A sensor in accordance with any one of the preceding claims, **characterized in that** the threaded pin (10) is composed of metal and is connected to the defined electric potential of the sensor (1).

7. A sensor in accordance with any one of the preceding claims, **characterized in that** the fastening groove (4) is of C shape.

8. A sensor in accordance with any one of the preceding claims, **characterized in that** the sliding block (8) is arranged in an exchangeable manner.

9. A sensor in accordance with any one of the preceding claims, **characterized in that** the sensor (1) has a respective fastening having a respective sliding block (8) at two oppositely disposed ends of an elongate sensor housing (2), whereby the sensor (1) is fastenable to each of the two ends.

## Revendications

1. Capteur comportant un boîtier de capteur (2), dans lequel le boîtier de capteur (2) ou une partie du boîtier de capteur (2) pénètre dans une gorge de fixation (4) dans un corps de fixation métallique (6) pour fixer ledit capteur (1), dans lequel est prévu un coulisseau métallique rotatif (8) sur le boîtier de capteur (2), le coulisseau (8) étant retenu par une tige filetée (10), **caractérisé en ce que** le coulisseau (8) est connecté à un potentiel électrique défini du capteur (1), la tige filetée étant une vis sans tête en métal, la vis sans tête prenant appui au fond de la gorge de fixation (4), lors d'une fixation.

2. Capteur selon la revendication 1, **caractérisé en ce que** le coulisseau (8) présente une forme de base rectangulaire en forme de plaque à quatre coins arrondis (30), deux coins opposés (30) présentant un premier rayon (32) supérieur à celui des deux autres coins arrondis (30).

3. Capteur selon la revendication 1, **caractérisé en ce que** le coulisseau (8) et la tige filetée (10) présentent chacun des pas correspondants qui s'engagent l'un dans l'autre, les pas correspondants formant un pas de vis dur à serrer.

4. Capteur selon l'une des revendications précédentes, **caractérisé en ce que** le coulisseau (8) présente une denture au moins sur un côté qui prend appui contre la paroi de la gorge.

5. Capteur selon l'une des revendications précédentes, **caractérisé en ce que** le potentiel défini est un potentiel de mise à la terre.

6. Capteur selon l'une des revendications précédentes, **caractérisé en ce que** la tige filetée (10) est constituée en métal et est connectée au potentiel électrique défini du capteur (1).

7. Capteur selon l'une des revendications précédentes, **caractérisé en ce que** la gorge de fixation (4) est réalisée en forme de C.

8. Capteur selon l'une des revendications précédentes, **caractérisé en ce que** le coulisseau (8) est agencé de façon interchangeable.

9. Capteur selon l'une des revendications précédentes, **caractérisé en ce que** à deux extrémités opposées d'un boîtier de capteur allongé (2), le capteur (1) présente une fixation respective avec un coulisseau respectif (8) permettant de fixer le capteur (1) à chacune des deux extrémités.
